# EUROPEAN PATENT SPECIFICATION

(11) **EP 0 582 764 B1**
(45) Date of publication and mention of the grant of the patent: **15.04.1998**
(21) Application number: 92810611.1
(22) Date of filing: 12.08.1992
(51) Int. Cl.: C09D 11/10, C09D 11/02

(54) **Dry powder for the preparation of aqueous printing inks**
Trockenpulver für die Herstellung von wässrigen Drucktinten
Poudre sèche pour la préparation d'encres d'imprimerie aqueuses

(43) Date of publication of application: 16.02.1994
(73) Proprietor: SICPA HOLDING S.A., 1003 Lausanne (CH)
(72) Inventor: Amon, Albert, CH-1005 Lausanne (CH); Ritter, Gebhard, CH-100 Lausanne (CH); Alpsteg, Roger, CH-1124 Gollion (CH)
(74) Representative: Hepp, Dieter

(56) References cited:
- DATABASE WPIL Week 9107, 7 January 1990 Derwent Publications Ltd., London, GB; AN 91-048172

## Description

The present invention belongs to the field of printing, including layer overprinting, of flexible substrates such as paper and thin cardboard, plastic sheets and webs, by the method of flexographic and gravure printing. The invention relates to printing inks and varnishes for industrial use.

In the following, product names may be registered trademarks, also if not marked as such.

Printing inks for gravure and flexographic printing have already been known for a rather long time. Such inks contain the following principal components: At least one pigment or dyestuff, i.e. a colouring agent; at least one binder resin; and a solvent system. The solvent system comprises organic liquids such as ketones, higher alcohols, esters, hydrocarbons, halo substituted hydrocarbons. The solvent is necessary to bring the binder resin in solution and to pick up the pigment to form a liquid wherein the resin is dissolved, at least to its major part, and the pigment is finely dispersed. After printing, the solvent is evaporated to leave a fine film of dry resin on the substrate which incorporates the pigment. Solvent based inks are very well known and widely spread in the art. They need not be described in more detail here.

Solvent based inks are intensively used in the printing industry especially for printing all kind of packages. Such inks have a number of advantages but also present serious drawbacks: Firstly, organic solvents are rather expensive. Furthermore, they are mostly toxic or at least hazardous to human and animal health, and thirdly, most of them are highly inflammable. Modern environmental protection, in particular the Clean Air Act, do no longer permit any emission of solvent vapours into the atmosphere. As a consequence, highly expensive solvent recovery systems must be installed in the printing ink manufacture facilities as well as in printing shops.

Therefore, the development and manufacture of aqueous printing inks is nowadays pushed forward, and there is already a well established production and use of aqueous printing inks and varnishes. Aqueous printing inks do of course not present the disadvantages of organic solvents and have the advantage of a better hold-out with cellulosic printing substrates such as paper and cardboard. They do not cause any fire risk.

Water based inks generally contain, besides the water, at least one pigment or dyestuff and at least one binder substance. Water based varnishes are generally free from pigment. As a binder substance, aqueous printing inks contain a rosin such as colophonium or shellac, or a synthetic polymer selected especially from acrylic acids, hydroxyacrylic acids and modified acrylics such as styrene acrylic acid copolymers. Such binder substances are completely or virtually insoluble in water systems but become soluble on addition of a base (alkali) after or before their incorporating into water. This solubility is due to soluble salt formation of the carboxylic acid groups of the binder. The binder becomes anew insoluble when it is retransferred to its acid state, e.g. by adding an acid to its solution, i.e. by lowering the pH of the solution. The change between the water insoluble and the water soluble forms is accomplished in aqueous printing inks by the addition of at least one volatile amine to the aqueous ink before printing. The acidic binder thus can form soluble amine salts. After printing and on drying the printings by heat, the said amine salts are split up into water insoluble acidic binder and volatile amine. The volatile amine leaves the printed indicia or areas, and the remaining binder acid acts as a perfectly water solid binder for the pigments and dyestuffs. Volatile amines which are currently used in the printing manufacture are, for example, ammonia or morpholine.

Since the water amount in water based printing inks, especially flexographic and gravure inks, makes up a relatively high proportion of such inks, typically from 30 to 75 % by weight, and since the inks are to be shipped from the manufacturer to the user, high amounts of water have to be transported which is a disadvantage. Furthermore, most printers wish to prepare just the desired amount of an ink freshly before printing a limited stock of paper or cardboard.

It has already been known to provide printing inks in dry, powdered form. Thus, EP-A-0 281 720, corresponding to US-A-4 756 759, discloses a powdered printing ink composition for forming, together with an organic ink solvent, a flexographic or gravure printing ink and a method for the manufacture of such powdered composition.

However, the patent just mentioned is exclusively directed to printing ink compositions for the preparation of inks which are not aqueous printing inks but organic solvent based printing inks. The major object of the patented invention was to avoid shipping of highly inflammable or even explosive organic solvents.

The Japanese patent application JP-A-03 000 777 discloses a water-soluble dry ink for handwriting utensils. In this ink, the dispersant is a salt of an acidic polymer with a volatile base.

This ink contains further a moiety providing a basic solution if solved in water and being preferably an inorganic salt.

This dry ink, however, is not designed for the special and generally more demanding requirements of modern printing techniques. Furtheron, as the dispersant is present in the neutralized form, the problem of getting insoluble in water by thermal decay while on stock, by evaporation of the volatile base, i.e. the neutralizing agent, is not solved.

The first and major object of the present invention is to provide a dry powder which can be mixed with water to give a water based printing ink.

Another object of the invention is to provide a dry powder which, when combined with water, gives an aqueous printing ink whose printing, drying, film forming and other useful properties do not substantially differ from those of an original water based printing ink.

Still another object of the invention is to provide a dry powder for reconstituting an aqueous printing ink where the dry powder is free from any apparent liquid component and free from components which show, at least when being a part of the powdery ink, not such a vapour pressure which could lead on prolongated stockage to an alteration of the composition of the powder.

A further object of the invention is to provide a method for the preparation of a dry powder giving an aqueous printing ink when combined with water and which can be used as a pigmented printing ink or as a varnish.

Now, these objects and still others are met by the powder and the method of the invention which are defined in the independent claims. Special features or embodiments are the subject of dependent claims.

As already mentioned above, printing inks in dry, powdered form have already been known from, e.g., EP-A-0 281 720 and US-A-4 756 759. However, the dry powders disclosed in these documents can only be used for exclusively solvent based, water free inks, and the ink systems disclosed cannot give any model for water based inks due to the complete different chemical systems and drying mechanisms of the printings.

The invention essentially provides a neutralizing system different from that of liquid aqueous printing inks in that the neutralizing agent is in solid form.

In this document, "solid form" not only defines originally solid substances but also, in extension, solid bodies which have adsorbed or absorbed a naturally liquid printing ink component, i.e. a liquid component transformed into the solid state. Although the active ink component is in liquid form, the invention provides a solid form of this component. When this solid form is contacted with water at the future stage of forming an aqueous printing ink, the liquid component is believed to be liberated from its solid entrapping environment and is dissolved in the water phase.

It should be emphasized that the neutralizing agents currently used in water-based printing inks and varnishes could not be used in the powder of the invention since the currently used neutralizing agent are exclusively liquid or even gaseous such as ammonia. The powder of the invention does not contain any perceptively liquid component.

The term "neutralizing agent" as used in this document comprises the basic substances which will render the water insoluble binder which is in acid form, water soluble in the finally prepared aqueous printing ink. At least the major part of the neutralizing agent must be able to leave its salt attachment to the acidic binder on heating, i.e. during the heat drying step of the printings made with the ink. Preferred are neutralizing agents which are volatile and leave the printings on heat drying. A non-exhaustive list of neutralizing agents comprises the following compounds: inorganic ammonium compounds such as ammonium carbonate, ammonium hydrogen carbonate; organic amino and amido compounds such as urea, ethanolamine, triethanolamine, morpholine, creatine, hexamethylene tetramine, melamine, 1,6-diaminohexane and other organic amines. If liquid compounds are to be used, they must first be transferred into a solid form, e.g. by adsorption on finely divided silica or silica gel or by microencapsulation.

The above listed neutralizing agents which are all volatile, at least in part, and the efficiency of the neutralizing agent may be enhanced by the addition of basic compounds which are not sensibly volatile. Examples for such basic compounds are basic inorganic hydroxides and salts, such as sodium hydroxide, sodium carbonate, sodium hydrogen carbonate; sodium oxide; the corresponding potassium and lithium compounds; oxides, carbonates and, if existing, hydrogen carbonates of calcium, magnesium, barium, strontium, zinc, further borax and other basic compounds such as sodium pyrophosphate. Of course, any selected neutralizing agent should preferably be colorless and nontoxic.

In the dry powder of the invention, the neutralizing agent makes up 0.1 to 20%, preferably 1 to 15 % by weight of the composition, the distribution being preferably about the following: 0 to 2 parts of NaOH, 0 to 1 part of KOH, 0 to 0.5 parts of LiOH, 3 to 10 parts of ammonium carbonate. The latter is known to be liable to decomposition on standing, decomposing into ammonia, carbon dioxide, and water. However, it has surprisingly been found that the other components of the dry powder act as stabilizers so that the powder has only a nearly imperceptible smell of ammonia.

The amount of the neutralizing agent to be used for preparing the dry powder of the invention depends upon the amount and the overall acid number of the acidic binder resin to be used and can be very easily calculated. The amount and the acid number of acidic resin used in predispersing the pigment or pigments (see below) must also be taken into account. The amount of neutralizing agent should preferably be such that the final pH of the aqueous printing ink prepared from the dry powder will be in the range of from 7.5 to 9, more preferably from 7.5 to 8.5, most preferably at about 8.

The acidic binder resin of the invention is typically an acidic binder resin which forms a film on the substrate in printing. Any known or new resins may be used which are soluble in the aqueous phase when neutralized with a basic neutralizing agent and will become substantially insoluble when the salt forming entity is removed so that the resin is retransformed into the acid state. Examples for such resins are polyacrylic acid, polymaleic acid, polymethacrylic acid, polyhydroxyacrylic acid and copolymers of these polyacids with other acids of this group or with other monomers, furthermore styreneacrylate resins, epoxy resins, polyamide resins, polyester resins, colophonium or rosin modified maleinate resins, shellac, polycarboxylic acids and resin or rosin esters. Such resins must have an acid number (which is expressed as usual by the value of mg of KOH necessary to neutralize 1 g of the resin) comprised between 20 and 500, preferably between 40 and 250, most preferably between 100 and 150. In this connection, it should be emphasized that the term "binder" or "binder resin" used in this document means not only an individual resin but any mixture of the above exemplified resins, and that the acid numbers given above refer to the total of all binder resins.

For special purposes and applications, neutral binder resins may be added to the acidic binder resins. Such neutral resins should be soluble in the aqueous ink phase; examples are methyl cellulose, hydroxyethyl cellulose and ionic sodium carboxymethyl cellulose, typically in amount up to 5 % by weight of the powder. Such neutral resins improve the viscosity and general rheology of the printing ink as well as printability and gloss of the finished printings; although such resins are water soluble and are not transferred into an insoluble state by acidification, they become much less soluble since they are embedded into the insoluble acidic binder resin. Furthermore, a good water resistance of the printing is generally not necessary since, when the printing inks of the invention are used to print packaging materials, they are laminated with thin plastic films to give water and oil resistance and a good and pleasant feeling and visual aspect.

The preferred selection of binder resins comprises resins having good pigment wetting power.

The dry powder of the invention further contains at least one pigment selected from pigments known per se. For this reason, it will not be necessary to describe the pigments in detail. Of course, if the powder is intended to give a varnish, no coloured pigments will be present. The pigment is added to the dry powder as a predispersion in an acidic binder resin and supplied in the form of so-called chips.

The dry powder of the invention may further contain auxiliary agents and conditioners, for example extenders, smoothing agents or rub resisting agents which improve the printability such as polytetrafluoroethylene or polyethylene wax, polyamine wax or other waxes, then plastifiers for the binder resins, antifoaming agents, thickening agents, surfactive agents, emulsifiers, antifouling agents and extenders. If any of these auxiliary agents is in liquid form, it is first transformed in solid form as mentioned above, for example adsorbed on finely divided inert solids such as silica or fumed silica or alumina. If an extender is used which has adsorbent ability, those liquid auxiliary agents may also be adsorbed on part or all of the extender.

Extenders which may be used in the dry powder of the invention are generally the same employed in liquid inks. Examples thereof are calcium carbonate, chalk, barium sulfate, titanium dioxide and china clay.

The dry powder of the invention is preferably prepared by a special method already known per se from Applicant's EP-A-0 281 720 already mentioned above and is obtained by a simultaneous dry comminuting and agglomerating treatment of the components to be found in the final dry powder. As to the method and its special embodiments, it is referred to this patent. Shortly spoken, the method comprises the following steps:
(a) mixing coarse particles of at least one pigment pre-dispersed in an acidic binder resin, having an acid number comprised between 20 and 500, coarse particles of the same or at least one other acidic binder resin, particles of at least one of the neutralizing agents specified above, and optionally further solid auxiliary materials for flexographic or gravure printing inks, to form a homogeneous blend of solid particles,
(b) comminuting said blend without adding liquid components in an inert gas atmosphere under conditions excluding the melting of components of the blend, and
(c) collecting the composition thus obtained as a free flowing powder.

In a preferred manner, nitrogen or carbon dioxyde gases are used to establish and maintain the inert gas atmosphere during step (b), and it is further preferred to cool the materials to be pulverized and also the comminuting device. The latter is typically an attrition mill such as an Alpine pinned disk mill provided with an inlet for the materials to be pulverized, a grinding chamber having a cooling jacket, and an outlet for the pulverized materials. Gaseous nitrogen or carbon dioxide is introduced, together with the blend to be pulverized, into the inlet of the attrition mill so that the grinding chamber is constantly maintained free from oxygen. As an inert gas, nitrogen is presently preferred. Fines having a particle size below 50 µm may be screened from the powdered composition obtained in the process so that the final composition has the aspect and physical behaviour of table salt or sugar. For details of the method just described, reference is again made to EP-A-0 281 720.

The dry powder of the invention has a composition, given in % by weight, which is generally the following, bearing in mind that varnishes do not contain pigments:

| | | | |
|---|---|---|---|
| pigment | 0 | to | 80 |
| binder resin(s) | 10 | to | 80 |
| neutralizing agent | 0.1 | to | 20*) |
| additives | 0 | to | 20 |
| extenders | 0 | to | 20. |

| | | | |
|---|---|---|---|
| *) amount to be adapted to the total acid of binder | | | |

The invention is further explained by way of concrete examples which are however not to be understood as to limit the invention thereto:

### Example 1. Yellow aqueous printing ink.

The following composition is made up by providing the components given below and blending them in a suitable vessel in the given sequence, all amount being given in parts by weight:

| | |
|---|---|
| 1. Pigment chips, composed of 20 to 90 % of an acrylic resin and 10 to 80 % of yellow pigment, suitable for aqueous inks | 67 |
| 2. Maleic binder resin | 15 |
| 3. Acrylic binder resin | 5 |
| 4. Neutralizing agent: NaOH 0.5 (NH₄)₂CO₃ 6.5 | 7 |
| 5. PTFE wax (printing aid) | 2 |
| 6. Additive*) | 6 |

| | |
|---|---|
| *) The additive has been prepared beforehand in adsorbing 15 parts of a liquid antifoaming composition, 10 parts of a thickening agent (a polyurethane emulsion), 20 parts of a liquid surfactive agent and 0 to 2 parts of an emulsifier on 55 parts of a silica powder (Syloid). A dry, free flowing mass is obtained which has all characters of a solid and does not show liquid aspects. | |

The maleinate resin 2) and in 1) is Rokramar 2051 (Robert Kramer, Bremen, Germany) having an acid number of about 150. The acrylic resin 3) was Joncryl 683 (Johnson) having an acid number of about 150. The amount of neutralizing agent 4) was selected to just neutralize the acid groups of components 1 to 3.

The ingredients are well blended in an open vessel during about 25 minutes. The blend is then continuously fed into an attrition mill of own construction. The atmosphere in the mill and in the feed and discharge lines is maintained substantially oxygen free by the constant introduction of a stream of gaseous nitrogen into the feed line. The temperature of the product and the nitrogen in the discharge line are constantly monitored; if this temperature exceeds 40 °C, the solids feed rate is decreased.

The solids feeding rate is controlled such as to obtain from the mill a deep yellow free flowing powder, free from dust particles, which is then sieved to finally recover a coarse, sugar-like powder having a particle size of 50 to 800 micrometers (microns).

33 parts of the powder thus obtained are mixed in a stirring vessel with 66 parts of tap water and 10 parts of ethanol or isopropanol. The ink which forms after about 10 to 20 minutes of stirring has a pH value of about 8 and can be printed on paper or cardboard by flexography and gravure printing after simple filtration if necessary.

### Example 2.

The general procedure of Example 1 was repeated but using a starting composition further containing 3 parts of a liquid plastifier for the binder resins. This plastifier was beforehand adsorbed on the Syloid of the additive. Furthermore, the composition contained 3 parts of hydroxyethyl cellulose.

The printings finally obtained showed a still better gloss and flexibility.

### Example 3. Colourless Varnish.

The following ingredients are mixed together and the blend is further processed as in Example 1:

| | |
|---|---|
| Acrylate resin, acid number about 160 | 75 parts |
| NaOH | 3 " |
| Ammonium carbonate | 10.5 " |
| polyethylene wax powder | 1.5 " |
| Additive, free flowing solid | 7.5 " |

The additive was composed of 50 parts of Syloid, 5 parts of defoamer, 40 parts of plastifier for the acrylic resin and 5 parts of a liquid surfactive agent.

A clear and perfectly printable varnish is obtained when the powder prepared according to the process of Example 1 is dissolved in a water alcohol mixture or in water alone.

The dry powder of the invention may be modified and completed within the scope of the invention. Thus, for example, liquid components necessary for the ink may be, instead of being adsorbed on a porous carrier, microencapsulated according to the well known coacervation techniques. Liquid neutralizing agent may be used instead of solid ones if they are adsorbed on solid porous carriers or microencapsulated.

## Claims

1. A dry powder for the preparation of aqueous printing inks and varnishes for flexographic and gravure printing, characterized by the fact that it contains at least one acidic binder resin having an acid number comprised between 20 and 500 and being water insoluble in its acid state but water soluble in neutralized state, and at least one water soluble or dispersible neutralizing agent selected at least in its major part from compounds which combine with said acidic binder resin to solubilize said acidic binder resin but are split off from said resin under the conditions of printing to leave said resin in its insoluble acidic state, said neutralizing agent being present in an amount capable of neutralizing and solubilizing said acidic binder resin, said powder being free from perceptively liquid components.

2. The dry powder of claim 1, characterized in that it further contains at least one pigment.

3. The dry powder of claim 1 and 2, characterized in that the pigment or pigments are present in the form of a pigment predispersion in at least one of said acidic binder resins.

4. The dry powder of any one of the preceding claims, characterized in that said acidic binder resins are selected from optionally modified acidic maleinate and acrylate resins.

5. The dry powder of claim 4, characterized in that said binder resins have an acid number comprised between 40 and 250.

6. The dry powder of any one of the preceding claims, characterized in that the neutralizing agent is mainly ammonium carbonate.

7. The dry powder of any one of the preceding claims, characterized in that the neutralizing agent further contains at least one basic substance permanently neutralizing said acidic binder resin.

8. The dry powder of claim 7, characterized in that said basic substance is NaOH, KOH or a carbonate of an alkali or alkali earth metal.

9. The dry powder of any one of the preceding claims, characterized in that it further contains an additive comprising a particulate adsorbing substance having adsorbed liquid components of the dry powder and being in solid, free flowing form.

10. The dry powder of claim 9, characterized in that the additive contains at least one component selected from antifoaming agents, printing aids, plastifiers, thickening agents and rheology modifiers, surfactive agents and emulsifiers.

11. The dry powder of any one of the preceding claims, characterized in that it further contains at least one neutral water soluble binder resin capable of improving the printing behaviour of the ink or the qualities of the printings.

12. A method for the preparation of the dry powder according to any one of the preceding claims, characterized in that it comprises the following steps:
(a) mixing coarse particles of at least one pigment pre-dispersed in an acidic binder resin having an acid number comprised between 20 and 500, coarse particles of the same or at least one other acidic binder resin, particles of at least one said neutralizing agent, and optionally further solid auxiliary materials for flexographic or gravure printing inks, to form a homogeneous blend of solid particles,
(b) comminuting said blend without adding liquid components in an inert gas atmosphere under conditions excluding the melting of components of the blend, and
(c) collecting the composition thus obtained as a free flowing powder.

13. The method of claim 12, characterized in that the prepared dry powder is sieved to separate fines having a size of up to 50 micrometers.

## Patentansprüche

1. Trockenpulver zur Herstellung wäßriger Druckfarben und Druckfirnisse für den Flexodruck und den Tiefdruck,
**dadurch gekennzeichnet**,
daß es wenigstens ein saures Bindemittelharz mit einer Säurezahl von 20 - 500, das in seinem sauren Zustand wasserunlöslich, in seinem neutralisierten Zustand jedoch wasserlöslich ist, und zumindest ein wasserlösliches oder dispergierbares Neutralisationsmittel aufweist, wobei zumindest der Hauptteil des Neutralisationsmittels aus Verbindungen ausgewählt ist, die sich mit dem sauren Bindemittelharz verbinden, um das saure Bindemittelharz löslich zu machen, sich jedoch vom Harz unter den Bedingungen beim Drucken abspalten, wodurch das Harz in seinem unlöslichen sauren Zustand verbleibt, wobei das Neutralisationsmittel in einer Menge vorliegt, die eine Neutralisation und Solubilisierung des sauren Bindemittelharzes ermöglicht, wobei das Pulver keine wahrnehmbaren flüssigen Bestandteile mehr aufweist.

2. Trockenpulver nach Anspruch 1,
dadurch gekennzeichnet,
daß es weiterhin wenigstens ein Pigment enthält.

3. Trockenpulver nach Anspruch 1 und 2,
dadurch gekennzeichnet,
daß das Pigment oder die Pigmente in Form einer Pigment-Vordispersion in zumindest einem der sauren Bindemittelharze vorliegt bzw. vorliegen.

4. Trockenpulver nach einem der vorhergehenden Ansprüche,
dadurch gekennzeichnet,
daß die sauren Bindemittelharze aus wahlweise modifizierten sauren Maleinat- und Acrylatharzen ausgewählt sind.

5. Trockenpulver nach Anspruch 4,
dadurch gekennzeichnet,
daß die Bindemittelharze eine Säurezahl von 40 - 250 aufweisen.

6. Trockenpulver nach einem der vorhergehenden Ansprüche,
dadurch gekennzeichnet,
daß das Neutralisationsmittel hauptsächlich Ammoniumcarbonat ist.

7. Trockenpulver nach einem der vorhergehenden Ansprüche,
dadurch gekennzeichnet,
daß das Neutralisationsmittel weiterhin zumindest eine basische Substanz enthält, die das saure Bindemittelharz dauerhaft neutralisiert.

8. Trockenpulver nach Anspruch 7,
dadurch gekennzeichnet,
daß die basische Substanz NaOH, KOH oder ein Carbonat eines Alkalimetalls oder Erdalkalimetalls ist.

9. Trockenpulver nach einem der vorhergehenden Ansprüche,
dadurch gekennzeichnet,
daß es weiterhin ein Additiv enthält, das eine teilchenförmige adsorbierende Substanz aufweist, die Flüssigbestandteile des Trockenpulvers adsorbiert hat und in fester, freifließender Form vorliegt.

10. Trockenpulver nach Anspruch 9,
dadurch gekennzeichnet,
daß das Additiv zumindest einen Bestandteil enthält, ausgewählt aus Antischaummitteln, Druckhilfsmitteln, Plastifizierungsmitteln, Verdickungsmitteln und Rheologiemodifizierungsmitteln, oberflächenaktiven Mitteln und Emulgatoren.

11. Trockenpulver nach einem der vorhergehenden Ansprüche,
dadurch gekennzeichnet,
daß es weiterhin zumindest ein neutrales wasserlösliches Bindemittelharz enthält, das zur Verbesserung des Druckverhaltens der Farbe oder der Qualitäten der Drucke befähigt ist.

12. Verfahren zur Herstellung des Trockenpulvers nach einem der vorhergehenden Ansprüche,
dadurch gekennzeichnet, daß es die nachfolgenden Schritte umfaßt:
(a) Vermischen grober Teilchen aus zumindest einem Pigment, das in einem sauren Bindemittelharz mit einer Säurezahl von 20 - 500 vordispergiert wird, grober Teilchen desgleichen oder zumindest eines anderen sauren Bindemittelharzes, Teilchen von zumindest einem der Neutralisationsmittel und wahlweise weiteren festen Hilfsmaterialien für Flexodruck- oder Tiefdruckfarben, um eine homogene Mischung aus Feststoffteilchen zu bilden,
(b) Zerkleinern der Mischung ohne Hinzufügen flüssiger Bestandteile in einer inerten Gasatmosphäre unter Bedingungen, die das Schmelzen der Bestandteile der Mischung ausschließen, und
(c) Sammeln der so erhaltenen Zusammensetzung als freifließendes Pulver.

13. Verfahren nach Anspruch 12,
dadurch gekennzeichnet,
daß das hergestellte Trockenpulver gesiebt wird, um Feinanteile mit einer Größe von bis zu 50 µm abzutrennen.

## Revendications

1. Poudre sèche pour la préparation d'encres et de vernis d'imprimerie aqueux pour la flexographie et l'héliogravure, caractérisée en ce qu'elle contient au moins une résine liante acide ayant un indice d'acide compris entre 20 et 500 et étant insoluble dans l'eau sous sa forme acide mais soluble dans l'eau sous forme neutralisée, et au moins un agent de neutralisation soluble ou dispersable dans l'eau choisi, au moins pour ce qui est de sa partie essentielle, parmi les composés qui se combinent avec ladite résine liante acide afin de solubiliser ladite résine liante acide mais qui se séparent de ladite résine dans les conditions d'impression pour laisser ladite résine dans son état acide insoluble, ledit agent de neutralisation étant présent en une quantité capable de neutraliser et de solubiliser ladite résine liante acide, ladite poudre étant dépourvue de constituants apparemment liquides.

2. Poudre sèche selon la revendication 1, caractérisée en ce qu'elle contient en outre au moins un pigment.

3. Poudre sèche selon les revendications 1 et 2, caractérisée en ce que le ou les pigments sont présents sous forme d'une prédispersion pigmentaire dans l'une au moins desdites résines liantes acides.

4. Poudre sèche selon l'une quelconque des revendications précédentes, caractérisée en ce que lesdites résines liantes acides sont choisies parmi les résines maléinate et acrylate acides, éventuellement modifiées.

5. Poudre sèche selon la revendication 4, caractérisée en ce que lesdites résines liantes ont un indice d'acide compris entre 40 et 250.

6. Poudre sèche selon l'une quelconque des revendications précédentes, caractérisée en ce que l'agent de neutralisation est principalement du carbonate d'ammonium.

7. Poudre sèche selon l'une quelconque des revendications précédentes, caractérisée en ce que l'agent de neutralisation contient, en outre, au moins une substance basique neutralisant de façon permanente ladite résine liante acide.

8. Poudre sèche selon la revendication 7, caractérisée en ce que ladite substance basique est NaOH, KOH ou un carbonate d'un métal alcalin ou alcalino-terreux.

9. Poudre sèche selon l'une quelconque des revendications précédentes, caractérisée en ce qu'elle contient en outre un additif comprenant une substance particulaire adsorbante ayant adsorbée des constituants liquides de la poudre sèche et étant sous forme solide à écoulement libre.

10. Poudre sèche selon la revendication 9, caractérisée en ce que l'additif contient au moins un constituant choisi parmi les agents antimousses, les auxiliaires d'impression, les plastifiants, les agents épaississants et les modificateurs de rhéologie, les tensioactifs et les émulsifiants.

11. Poudre sèche selon l'une quelconque des revendications précédentes, caractérisée en ce qu'elle contient en outre au moins une résine liante neutre, soluble dans l'eau, capable d'améliorer le comportement à l'impression de l'encre ou les qualités des impressions.

12. Procédé pour la préparation de la poudre sèche selon l'une quelconque des revendications précédentes, caractérisé en ce qu'il comprend les étapes suivantes consistant à:
(a) mélanger des particules grossières d'au moins un pigment prédispersé dans une résine liante acide ayant un indice d'acide compris entre 20 et 500, des particules grossières de la même, ou d'au moins une autre, résine liante acide, des particules d'au moins un dudit agent de neutralisation et, éventuellement, d'autres matières solides auxiliaires pour encres de flexographie ou d'héliogravure, pour former un mélange homogène de particules solides,
(b) réduire en poudre ledit mélange sans ajouter de constituants liquides sous une atmosphère de gaz inerte dans des conditions excluant la fusion des constituants du mélange, et
(c) recueillir la composition ainsi obtenue sous forme d'une poudre à écoulement libre.

13. Procédé selon la revendication 12, caractérisé en ce que la poudre sèche préparée est tamisée pour séparer les fines ayant une taille allant jusqu'à 50 micromètres.
